# EUROPÄISCHE PATENTANMELDUNG

(11) **EP 4 796 802 A1**
(43) Veröffentlichungstag der Anmeldung: **26.08.2026**
(21) Anmeldenummer: 25159167.3
(22) Anmeldetag: 20.02.2025
(51) Int. Cl.: F16C 29/06, F16C 41/00

(54) **LINEARFÜHRUNGSSCHLITTEN UND LINEARFÜHRUNG**

(71) Anmelder: Schneeberger Holding AG, 4914 Roggwil (CH)
(72) Erfinder: GÖTZ, Klaus-Dieter, 74372 Sersheim (DE); HAEFNER, Peter, 75305 Neuenbürg (DE); DANN, Thomas, 76307 Karlsbad (DE)
(74) Vertreter: EGLI-EUROPEAN PATENT ATTORNEYS

(57) **Zusammenfassung**

Es wird ein Linearführungsschlitten (3) zur linearen Führung entlang einer Führungseinrichtung (2) vorgesehen, der umfasst: einen Laufabschnitt (3a), zwischen dem und der Führungseinrichtung (2) eine Vielzahl von Wälzkörpern (4) beweglich sind, um den Linearführungsschlitten (3) relativ zur Führungseinrichtung (2) bewegen zu lassen; eine Rückführeinrichtung (6), die ausgestaltet ist, die Vielzahl von Wälzkörpern (4) von einem Ende des Laufabschnitts (3a) zum anderen Ende des Laufabschnitts (3a) zurückzuführen; und eine Energieerzeugungseinrichtung (7), die ausgestaltet ist, durch Interaktion mit zumindest einem Wälzkörper (4) in einem Interaktionsabschnitt (9) der Rückführeinrichtung (6) elektrische Energie bereitzustellen.

## Beschreibung

### Gebiet der Erfindung

Die vorliegende Erfindung bezieht sich auf einen Linearführungsschlitten und eine Linearführung.

### Hintergrund der Erfindung

Im Stand der Technik sind Linearführungen bekannt, die einen Linearführungsschlitten und eine Führungseinrichtung umfassen. Der Linearführungsschlitten kann sich über Wälzkörper relativ zur Führungseinrichtung bewegen. Es gibt zunehmend Anforderungen, einen solchen Linearführungsschlitten energetisch autark auszugestalten.

Beispielsweise ist in der DE10 2018 209 999 A1 ein Linearführungsschlitten offenbart, der ein Reibrad aufweist. Das Reibrad ist mit der Führungseinrichtung in Kontakt und wird bei Relativbewegung zwischen Linearführungsschlitten und Führungseinrichtung in Drehung versetzt und treibt somit einen Generator an, der elektrische Energie bereitstellen kann, um beispielsweise einen Sensor zu speisen.

Jedoch ist im Stand der Technik die Gewinnung der elektrischen Energie relativ aufwändig, und der Linearführungsschlitten wird komplex. Die Gewinnung der elektrischen Energie hängt weiterhin von externen Faktoren, wie der Reibung zwischen Führungseinrichtung und Reibrad, ab.

Es ist somit Aufgabe der vorliegenden Erfindung einen verbesserten Linearführungsschlitten vorzusehen, der die obigen Nachteile überwinden kann.

### Zusammenfassung der Erfindung

Diese Aufgabe wird erfindungsgemäß gelöst durch einen Linearführungsschlitten mit den Merkmalen nach Anspruch 1.

Gemäß einem Aspekt wird ein Linearführungsschlitten zur linearen Führung entlang einer Führungseinrichtung vorgesehen, der umfasst: einen Laufabschnitt, zwischen dem und der Führungseinrichtung eine Vielzahl von Wälzkörpern beweglich sind, um den Linearführungsschlitten relativ zur Führungseinrichtung bewegen zu lassen; eine Rückführeinrichtung, die ausgestaltet ist, die Vielzahl von Wälzkörpern von einem Ende des Laufabschnitts zum anderen Ende des Laufabschnitts zurückzuführen; und eine Energieerzeugungseinrichtung, die ausgestaltet ist, durch Interaktion mit zumindest einem Wälzkörper in einem Interaktionsabschnitt der Rückführeinrichtung elektrische Energie bereitzustellen.

Gemäß diesem Aspekt wird die elektrische Energie durch Interaktion mit zumindest einem Wälzkörper gewonnen, insbesondere durch Umwandlung der kinetischen Energie und/oder potentiellen Energie des zumindest einen Wälzkörpers. Somit kann die Gewinnung der elektrischen Energie auf einfache Weise mittels bereits bei einer Linearführung vorhandener Komponenten, insbesondere mittels der Wälzkörper, erfolgen. Weiterhin ist der Interaktionsabschnitt in der Rückführeinrichtung, also mit anderen Worten nicht im Laufabschnitt, vorgesehen. Somit kann die Energieerzeugungseinrichtung an der Rückführeinrichtung vorgesehen werden, ohne andere Elemente in der Umgebung, wie die Führungseinrichtung, zu stören. Die Energieerzeugungseinrichtung kann dadurch einfach vorgesehen werden, und der Linearführungsschlitten kann kompakt gehalten werden. Darüber hinaus kann der Laufabschnitt weitgehend unbeeinflusst von der elektrischen Energiegewinnung bleiben, insbesondere die Wälzkörper im Laufabschnitt. Die Kraftübertragung sowie die Relativbewegung zwischen Führungseinrichtung und Linearführungsschlitten können demnach zuverlässig erfolgen.

Es ist zur Kenntnis zu nehmen, dass der Linearführungsschlitten die Vielzahl von Wälzkörpern umfassen kann.

Die Rückführeinrichtung kann jede Einrichtung beschreiben, die mit dem Laufabschnitt einen geschlossenen Pfad für die Wälzkörper definiert, also eine Umlaufeinrichtung bildet. Die Wälzkörper können entlang dieses geschlossenen Pfads zirkulieren. Die Rückführeinrichtung ermöglicht es, dass der Linearführungsschlitten zur Endlosführung geeignet ist. Eine Form des geschlossenen Pfads ist nicht besonders festgelegt. Die Rückführeinrichtung kann integral mit dem Laufabschnitt ausgebildet sein, oder kann getrennt davon vorgesehen sein. Auch kann die Rückführeinrichtung selbst mehrere getrennte Elemente umfassen.

Der Laufabschnitt ist ein Abschnitt, der der Führungseinrichtung zugewandt ist. Er ist insbesondere ein lasttragender Abschnitt, in dem eine Kraft zwischen Linearführungsschlitten und Führungseinrichtung über die Wälzkörper übertragbar ist. Er kann direkt mit den Wälzkörpern in Kontakt stehen.

Die Energieerzeugungseinrichtung kann zumindest teilweise, insbesondere vollständig, auf einer der Führungseinrichtung abgewandten Seite bezüglich des Laufabschnitts vorgesehen sein.

Weiterhin kann die Energieerzeugungseinrichtung zumindest teilweise, insbesondere vollständig, bezüglich eines in einer Richtung quer zur linearen Führungsrichtung von dem Laufabschnitt entferntesten Abschnitt der Rückführeinrichtung auf einer der Führungseinrichtung zugewandten Seite vorgesehen sein.

Wie bereits erwähnt, kann die Energieerzeugungseinrichtung an der Rückführeinrichtung vorgesehen sein, insbesondere am Interaktionsabschnitt, und weiterhin in direktem Kontakt damit sein.

Die Energieerzeugungseinrichtung kann weiterhin einen Teil der Rückführeinrichtung ausbilden.

Die Energieerzeugungseinrichtung kann den Interaktionsabschnitt in einem Schnitt quer zu einer Erstreckungsrichtung des Interaktionsabschnitts zumindest teilweise, insbesondere vollständig umgeben.

Der Interaktionsabschnitt kann in einem linearen Abschnitt der Rückführeinrichtung vorliegen.

Dies kann weiterhin die Anbringung und/oder die Gestalt der Energieerzeugungseinrichtung erleichtern. Weiterhin kann die Auswirkung auf die Wälzkörper gering gehalten werden. So kann beispielsweise ein Verklemmen der Wälzkörper verhindert werden. Die Energieerzeugungseinrichtung kann beispielsweise quer zur linearen Führungsrichtung des linearen Abschnitts angebracht werden und/oder sich parallel zur linearen Führungsrichtung erstrecken.

Dabei kann der Interaktionsabschnitt insbesondere in einem linearen Abschnitt parallel zu einer linearen Führungsrichtung vorgesehen sein.

Somit kann die Komplexität des Linearführungsschlittens weiter reduziert werden. Auch die Anbringung der Energieerzeugungseinrichtung kann erleichtert werden.

Alternativ kann der Interaktionsabschnitt in einem gekrümmten Abschnitt der Rückführeinrichtung vorliegen.

Damit kann der gekrümmte Abschnitt zum Umlenken der Wälzkörper dienen und gleichzeitig die Energieerzeugung damit vorgenommen werden. Auch dadurch kann die Komplexität des Linearführungsschlittens gering gehalten werden. Weiterhin kann die Energieerzeugungseinrichtung beispielsweise zumindest teilweise radial innerhalb des gekrümmten Abschnitts vorgesehen sein, womit ausreichend Platz für die Energieerzeugungseinrichtung vorgesehen werden kann. Weiterhin kann eine Zentrifugalkraft des zumindest einen Wälzkörpers für die Energieerzeugung verwendet werden.

Die Energieerzeugungseinrichtung kann eine Induktionseinrichtung umfassen.

Dadurch kann induktiv eine elektrische Spannung vorgesehen werden. Weiterhin können die Auswirkungen auf die Zirkulation der Wälzkörper gering gehalten werden.

Die Induktionseinrichtung kann beispielsweise umfassen: eine Einrichtung zur Erzeugung eines statischen Magnetfeldes in einem Raumbereich, insbesondere dem Interaktionsabschnitt, den die Wälzkörper im Betrieb bei Zirkulation in der Umlaufeinrichtung nacheinander durchqueren müssen, wobei die Wälzkörper aus einem magnetisch permeablen Material bestehen, sodass die Wälzkörper geeignet sind, das Magnetfeld abhängig von der Position der Wälzkörper in dem einen Raumbereich zu beeinflussen; und mindestens eine Induktionsspule mit mindestens einer Spulenwindung, wobei die mindestens eine Induktionsspule relativ zu der Einrichtung zur Erzeugung eines statischen Magnetfeldes derart stationär angeordnet ist, dass sie aufgrund einer Änderung der Position der Wälzkörper bei einer Zirkulation der Wälzkörper durch den einen Raumbereich eine Änderung eines magnetischen Flusses erfährt, die in der mindestens einen Spulenwindung eine elektrische Spannung induziert.

Die Wälzkörper können beispielsweise aus Stahl gefertigt sein.

Alternativ und oder zusätzlich kann die Energieerzeugungseinrichtung eine piezoelektrische Einrichtung umfassen.

Die piezoelektrische Einrichtung kann so ausgestaltet sein, dass bei Einwirken einer Kraft auf ein Verformungselement eine elektrische Spannung bereitgestellt wird. Die piezoelektrische Einrichtung kann so angeordnet sein, dass sie im Interaktionsabschnitt eine Trägheitskraft, wie die Zentrifugalkraft, und/oder Gravitationskraft und/oder elastische Kraft von dem zumindest einen Wälzkörper empfängt.

Gemäß einem weiteren Aspekt kann der Linearführungsschlitten weiterhin eine Sensoreinheit umfassen, die energetisch mit der Energieerzeugungseinrichtung gekoppelt ist.

Dadurch können technisch relevante Informationen am Linearführungsschlitten detektiert werden. Die Sensoreinheit kann mit der von der Energieerzeugungseinrichtung bereitgestellten elektrischen Energie gespeist werden.

Die Sensoreinheit kann beispielsweise einen Schmiermittelsensor, der Informationen über Schmiermittelzusammensetzung und/oder -menge detektiert, einen Temperatursensor, der eine Temperatur detektiert, und/oder einen Inertialsensor umfassen, der zumindest eine translatorische und/oder rotatorische Beschleunigung detektiert, umfassen.

Insbesondere kann die Sensoreinheit ausgestaltet sein, eine Eigenschaft in der Rückführeinrichtung in einem Detektionsabschnitt der Rückführeinrichtung zu detektieren.

Dadurch kann die Sensoreinheit ähnlich wie die Energieerzeugungseinrichtung einfach vorgesehen werden, da sie nicht mit dem Laufabschnitt interferieren muss. Weiterhin kann die Sensoreinheit an der Rückführeinheit und dadurch relativ nahe an der Energieerzeugungseinrichtung vorgesehen werden, was wiederum kurze Leitungen zur Energieversorgung an die Sensoreinheit ermöglicht. Der Schmiermittelsensor kann beispielsweise eine Schmiermittelzusammensetzung und/oder -menge eines Schmiermittels in der Rückführeinrichtung detektieren. Der Temperatursensor kann beispielsweise eine Temperatur im Inneren der Rückführeinrichtung, insbesondere des Schmiermittels, detektieren. Der Inertialsensor kann beispielsweise eine Beschleunigung von zumindest einem Wälzkörper detektieren.

Wie bereits erwähnt, kann die Sensoreinheit an der Rückführeinrichtung vorgesehen sein, insbesondere am Detektionsabschnitt, und weiterhin insbesondere in direktem Kontakt damit.

Die Sensoreinheit kann den Detektionsabschnitt in einem Schnitt quer zu einer Erstreckungsrichtung des Detektionsabschnitts zumindest teilweise, insbesondere vollständig umgeben.

Weiterhin kann der Detektionsabschnitt in einem linearen Abschnitt der Rückführeinrichtung vorliegen.

Dies ermöglicht weiterhin ein einfaches Vorsehen und eine einfache Gestalt der Sensoreinheit. Die Sensoreinheit kann beispielsweise quer zu einer linearen Führungsrichtung des linearen Abschnitts angebracht werden und/oder sich parallel zur linearen Führungsrichtung erstrecken.

Der Detektionsabschnitt kann dabei an einer Position vorgesehen sein, die von dem Interaktionsabschnitt versetzt ist.

Somit kann eine Interferenz von Energieerzeugung und Informationsdetektion vermieden werden. Weiterhin kann der Linearführungsschlitten quer zur linearen Richtung kompakt ausgeführt werden. Die Komplexität kann weiterhin gering gehalten werden. Der Detektionsabschnitt und der Interaktionsabschnitt können entlang eines linearen Abschnitts parallel zur linearen Führungsrichtung vorgesehen sein.

Gemäß einem weiteren Aspekt kann der Linearführungsschlitten einen Grundkörper aufweisen, und die Rückführeinrichtung kann zumindest im Interaktionsabschnitt und/oder im Detektionsabschnitt vom Grundkörper getrennt ausgebildet sein.

Dies lässt eine weitere Vereinfachung der Herstellung des Linearführungsschlittens zu. Beispielsweise kann die Energieerzeugungseinrichtung und/oder die Sensoreinheit als Unterbaugruppe an der Rückführeinrichtung gemäß dem entsprechenden Abschnitt vorab befestigt werden.

Gemäß noch einem weiteren Aspekt kann der Linearführungsschlitten weiterhin eine drahtlose Kommunikationseinheit umfassen, die mit der Energieerzeugungseinrichtung energetisch gekoppelt ist.

Damit kann der Linearführungsschlitten Informationen senden und/oder empfangen. Es ist weiterhin möglich die Drahtloskommunikation autark am Linearführungsschlitten vorzusehen, da die Energie einfach über Leitungen an die drahtlose Kommunikationseinheit bereitgestellt werden kann.

Insbesondere kann die drahtlose Kommunikationseinheit entlang einer linearen Führungsrichtung weiter außen liegen als die Energieerzeugungseinrichtung und/oder die Sensoreinheit.

Dies ermöglicht eine weitestgehend störungsfreie drahtlose Kommunikation. Eine Behinderung von Signalen der Kommunikationseinheit durch die Sensoreinheit und/oder die Energieerzeugungseinrichtung kann verhindert werden.

Die drahtlose Kommunikationseinheit kann beispielsweise in einem Endabschnitt, insbesondere in einer Endkappe, die einen Grundkörper des Linearführungsschlittens endseitig abschließt, entlang der linearen Führungsrichtung vorgesehen sein.

Insbesondere kann die drahtlose Kommunikationseinheit zur Außenseite des Linearführungsschlittens hin freigelegt sein.

Gemäß noch einem weiteren Aspekt kann der Linearführungsschlitten eine elektronische Steuereinrichtung umfassen, die energetisch mit der Energieerzeugungseinrichtung gekoppelt ist.

Die elektronische Steuereinrichtung kann Prozesse in dem Linearführungsschlitten steuern, wie eine Steuerung der Energieerzeugungseinrichtung, der Sensoreinheit und/oder der drahtlosen Kommunikation, einzeln oder untereinander. Diese Steuerung kann autark am Linearführungsschlitten erfolgen, da die elektrische Energie von der Energieerzeugungseinrichtung bereitgestellt werden kann.

Weiterhin können die Energieerzeugungseinrichtung und/oder die Sensoreinheit und/oder die drahtlose Kommunikationseinheit und/oder die elektronische Steuereinrichtung als Module ausgestaltet sind.

Dies ermöglicht weiterhin eine einfache Ausgestaltung. "Als Module ausgestaltet" bedeutet, dass die jeweiligen Elemente (Energieerzeugungseinrichtung und/oder die Sensoreinheit und/oder die drahtlose Kommunikationseinheit und/oder die elektronische Steuereinrichtung) als Einheit am Linearführungsschlitten montiert und/oder demontiert werden können. Dies ist insbesondere vorteilhaft, wenn die Rückführeinrichtung als getrenntes Element vom Grundkörper vorgesehen ist. Die jeweiligen Elemente können jeweils ein eigenes Gehäuse aufweisen. Auch können mehrere Elemente in einem Modul zusammengefasst sein.

Gemäß einem weiteren Aspekt wird eine Linearführung vorgesehen, die umfasst: eine Führungseinrichtung; und den Linearführungsschlitten nach zumindest einem der vorangehenden Aspekte, der relativ zur Führungseinrichtung beweglich ist.

Damit können die obigen Effekte in einer Linearführung erzielt werden.

### Kurzbeschreibung der Zeichnungen

Die vorliegende Erfindung wird im Folgenden unter Bezugnahme auf die Zeichnungen beschrieben.
Fig. 1 zeigt eine perspektivische Ansicht einer Linearführung.
Fig. 2 zeigt eine perspektivische Ansicht eines Linearführungsschlittens in einem zu Fig. 1 umgedrehten Zustand.
Fig. 3 zeigt den Linearführungsschlitten gemäß Fig. 2, wobei ein Grundkörper entfernt ist.
Fig. 4 zeigt zwei Rücklaufrohre, von denen eines mit einer piezoelektrischen Einrichtung ausgebildet ist.
Fig. 5 zeigt eine Vorderansicht entlang der linearen Führungsrichtung auf den Linearführungsschlitten mit abgenommener Endkappe, wobei die Rücklaufrohre von Fig. 4 vorgesehen sind.
Fig. 6 zeigt zwei Rücklaufrohre, von denen eines mit einer Induktionseinrichtung ausgebildet ist.
Fig. 7A zeigt eine beispielhafte Anordnung von Energieerzeugungseinrichtung und Sensoreinheit.
Fig. 7B zeigt eine weitere beispielhafte Anordnung von Energieerzeugungseinrichtung und Sensoreinheit.

### Detaillierte Beschreibung beispielhafter Ausführungsformen

Für dieselben Elemente in den Figuren sind jeweils dieselben Bezugszeichen verwendet, wenn nichts anderes erwähnt ist.

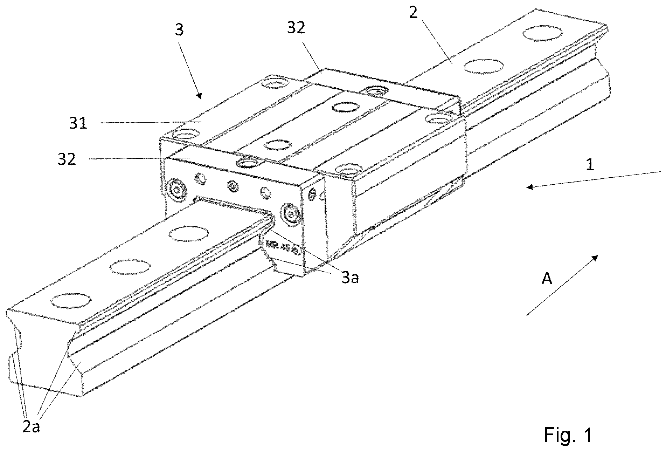

In Fig. 1 ist eine Linearführung 1 dargestellt. Die Linearführung 1 umfasst eine sich in einer linearen Führungsrichtung A erstreckende Führungseinrichtung 2. Die Führungseinrichtung 2, die hier als Führungsschiene ausgebildet ist, enthält eine Vielzahl von Laufflächen 2a. Zwei außenliegende Laufflächen 2a sind auf einer Seite in einer Breitenrichtung quer zur Führungsrichtung A vorgesehen, während zwei weitere außenliegende Laufflächen 2a auf der anderen Seite vorgesehen sind. Die Laufflächen 2a sind im Wesentlichen symmetrisch bezüglich einer Mittelebene der Führungseinrichtung 2 entlang der Führungsrichtung. Je zwei Laufflächen 2a auf einer Seite bezüglich der Mittelebene sind in der Draufsicht entlang der Führungsrichtung A in einer V-Form in der Breitenrichtung vorgesehen.

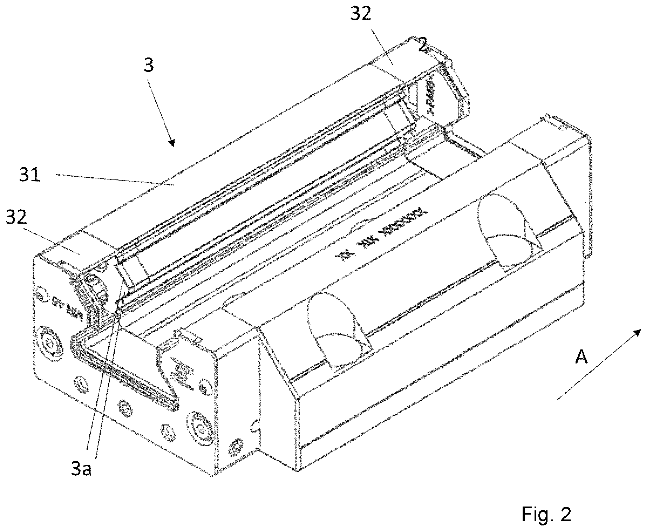

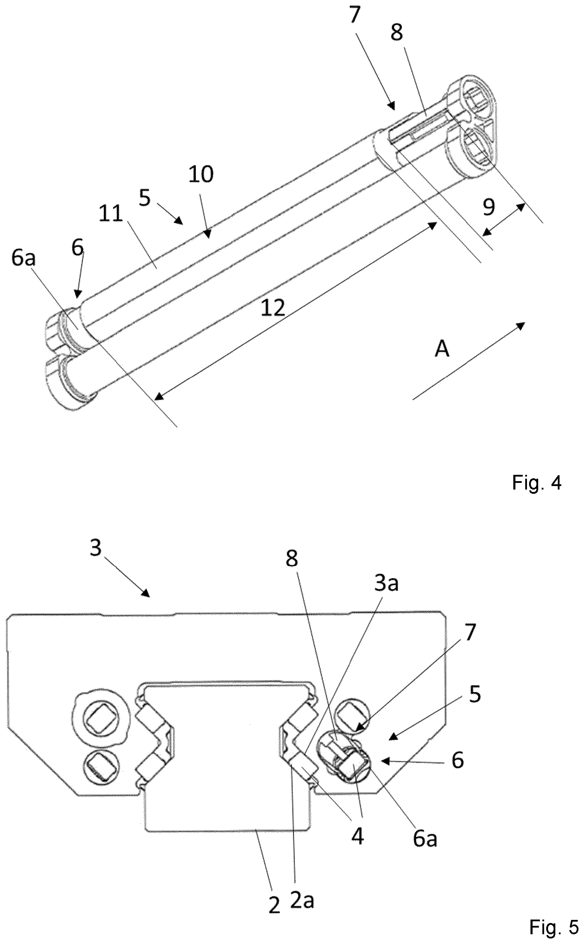

Weiterhin enthält die Linearführung 1 einen Linearführungsschlitten 3, der ebenfalls in Fig. 2 in einem umgedrehten Zustand dargestellt ist. Der Führungsschlitten 3 umgreift die Führungseinrichtung 2 im Wesentlichen in einer umgedrehten U-Form. An den beiden Schenkeln der U-Form sind jeweils zwei innenliegende Laufflächen 3a ausgebildet. Die Laufflächen liegen sich in der Breitenrichtung gegenüber, wobei ein Einsetzraum dazwischen gebildet ist, in den die Führungseinrichtung 2 eingesetzt ist. Die Führungseinrichtung 2 ist so in den Einsetzraum eingesetzt, dass je eine Lauffläche 2a mit einer Lauffläche 3a zusammenwirkt, wobei eine Vielzahl von Wälzkörpern 4, wie in Fig. 5 gezeigt, dazwischen angeordnet sind.

Der Linearführungsschlitten 3 kann sich über die Wälzkörper 4 entlang der Führungsrichtung A relativ zur Führungseinrichtung 2 hin- und zurückbewegen, wobei sich die Wälzkörper zwischen der Lauffläche 3a (Laufabschnitt gemäß den Ansprüchen) und der Lauffläche 2a bewegen. Eine Relativbewegungsebene wird durch die Führungsrichtung A und die Breitenrichtung definiert.

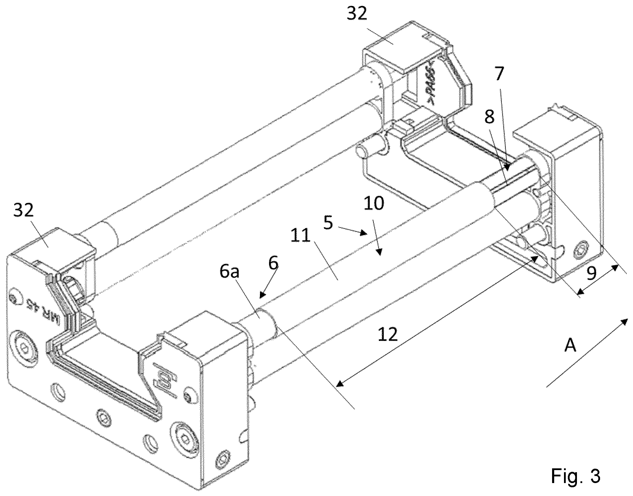

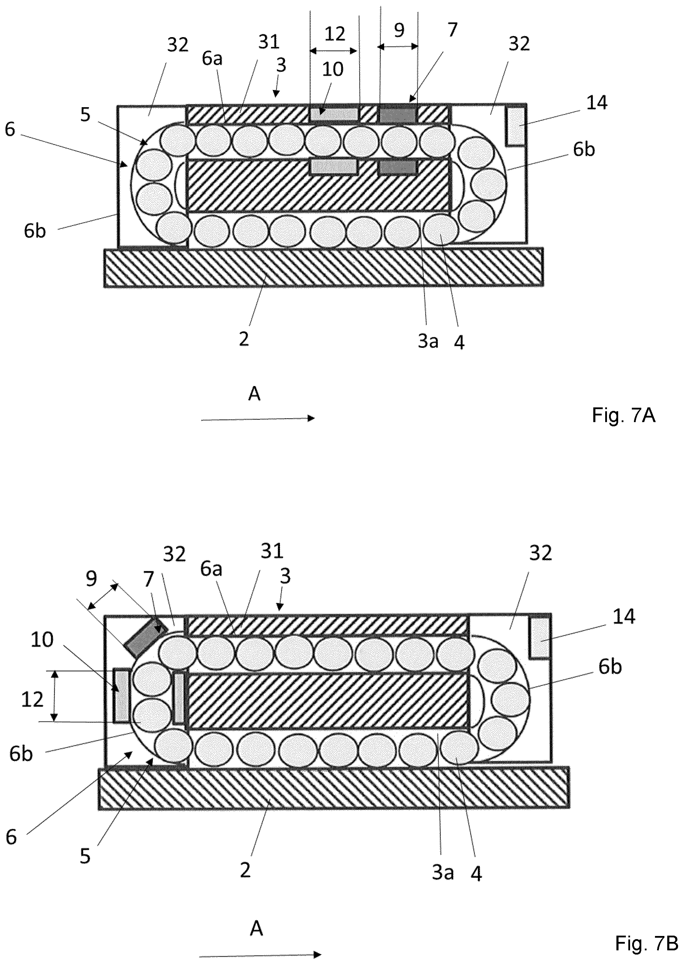

Jede Lauffläche 3a ist Teil einer jeweiligen Umlaufeinrichtung 5, wie sie insgesamt schematisch in Figuren 7A und 7B im Längsschnitt gezeigt ist. Die Umlaufeinrichtung 5 umfasst neben der Lauffläche 3a eine Rückführeinrichtung 6. Die Rückführeinrichtung 6 ist zu beiden Enden der Lauffläche 3a entlang der Führungsrichtung A kontinuierlich und umfasst ein Rückführrohr 6a, das sich linear und parallel zur Lauffläche 3a entlang der Führungsrichtung A erstreckt. Das Rückführrohr 6 ist beispielsweise in den Figuren 3, 4 und 6 dargestellt. Das Rückführrohr 6a liegt in der Breitenrichtung weiter außen (auf einer der Führungseinrichtung 2 abgewandten Seite) in Bezug auf die Lauffläche 3a, ist also davon beabstandet. Weiterhin umfasst die Rückführeinrichtung 6 zwei gekrümmte Abschnitte 6b (siehe Figuren 7A und 7B), die zu beiden Seiten in der Führungsrichtung A die Lauffläche 3a und das Rückführrohr 6a verbinden.

Die gekrümmten Abschnitte 6b sind konvex in einer Ebene parallel zur Relativbewegungsebene gekrümmt.

Die gesamte Umlaufeinrichtung erstreckt sich insgesamt im Wesentlichen parallel zur Relativbewegungsebene.

Wie in Figuren 1 und 2 dargestellt, umfasst der Linearführungsschlitten 3 einen Grundkörper 31 und zwei Endkappen 32, die den Grundkörper 31 an beiden Endseiten entlang der Führungsrichtung A abschließen. Die Endkappen 32 können anbringbar und abnehmbar vom Grundkörper 31 ausgestaltet sein, also als getrennte Elemente. In Fig. 3 ist der Grundkörper 31 nicht dargestellt. Wie in Figuren 7A und 7B gezeigt, sind die gekrümmten Abschnitte 6b jeweils in einer Endkappe 32 vorgesehen. Die gekrümmten Abschnitte können rohrförmig und/oder als getrennte Elemente zur Endkappe vorgesehen werden.

Die Rückführeinrichtung 6 ermöglicht eine Zirkulation der Wälzkörper 4 von einem Ende des Laufabschnitts 3a in der Führungsrichtung A zum anderen Ende des Laufabschnitts 3a in der Führungsrichtung A. Die Rückführeinrichtung 6 ist ausgestaltet, die Zirkulation zu führen, und umgibt dabei die Wälzelemente 4 vollständig. Die Rückführeinrichtung 6 ist insbesondere fluiddicht ausgestaltet. Weiterhin kann ein Raum zwischen der Lauffläche 3a und der entsprechenden Lauffläche 2a der Führungseinrichtung 2 abgedichtet sein.

Zu beachten ist, dass das Rückführrohr 6a hier dem linearen Abschnitt der Ansprüche entspricht. Mit anderen Worten, das Rückführrohr 6a definiert einen im Wesentlichen geraden Pfad für die Wälzkörper 4, insbesondere eine Mittellinie des Rückführrohrs 6a.

In Fig. 4 sind lediglich zwei Rücklaufrohre 6a jeweils entsprechend einer Lauffläche 3a des Linearführungsschlittens 3 gezeigt, wie sie auch in Fig. 3 zusammen mit den Endkappen 32 dargestellt sind.

Gemäß der Erfindung weist der Linearführungsschlitten 3 eine Energieerzeugungseinrichtung 7 auf. Die Energieerzeugungseinrichtung 7 kann elektrische Energie durch Interaktion mit zumindest einem Wälzkörper 4 bereitstellen. Insbesondere kann kinetische und/oder potentielle Energie der Wälzkörper 4 in elektrische Energie umgewandelt werden.

Im Beispiel von Figuren 3 und 4 umfasst die Energieerzeugungseinrichtung 7 eine piezoelektrische Einrichtung 8. Die piezoelektrische Einrichtung 8 ist so ausgestaltet, dass bei Einwirken einer Kraft auf ein Verformungselement eine elektrische Spannung bereitgestellt wird. Das Verformungselement kann sich insbesondere elastisch verformen. Hier kann das Verformungselement ein Piezo-Kristall sein. Die piezoelektrische Einrichtung 8 ist so angeordnet sein, dass sie entsprechend einem Interaktionsabschnitt 9 der Rückführeinrichtung 6, insbesondere des Rückführrohrs 6a, hier eine Gravitationskraft von zumindest einem Wälzkörper empfängt.

In Figuren 3 und 4 ist der Interaktionsabschnitt 9 gezeigt. Der Interaktionsabschnitt 9 ist ein Abschnitt entlang der Erstreckungsrichtung der Rückführeinrichtung 6, in dem die Wälzkörper mit der Energieerzeugungseinrichtung 7 interagieren. Die Energieerzeugungseinrichtung 7 (piezoelektrische Einrichtung 8) ist hier als ein Modul ausgestaltet. Die Energieerzeugungseinrichtung 7 bildet hier einen Teil der Rückführeinrichtung 6 aus, insbesondere einen Endabschnitt des Rückführrohrs 6a. Insbesondere kann die piezoelektrische Einrichtung 8 direkt mit dem zumindest einem Wälzkörper 4 in Kontakt kommen und somit die Kraft empfangen. Mit anderen Worten, die Energieerzeugungseinrichtung 7 kann den zumindest einen Wälzkörper vollständig umgeben, um dadurch einen Teil der Rückführeinrichtung 6 zu bilden.

In Figuren 3 und 4 ist weiterhin eine Sensoreinheit 10 gezeigt, die an der Rückführeinrichtung 6, insbesondere an dem Rückführrohr 6, als Modul angebracht ist. Die Sensoreinheit 10 ist an einer Außenperipheriefläche der Rückführeinrichtung 6 vorgesehen und umfasst hier einen Schmiermittelsensor, der eine Menge und/oder Zusammensetzung an Schmiermittel in der Rückführeinrichtung 6 detektiert. Die Sensoreinheit 10 umfasst zwei sich gegenüberliegende Elektroden 11, positiv und negativ, wobei die Wälzkörper 4 dazwischen liegen. Ein Schmiermittel in der Rückführeinrichtung 6 dient somit als Dielektrikum, was die Ermittlung der Menge und/oder Zusammensetzung des Schmiermittels erlaubt. Die Elektroden erstrecken sich parallel zum Rückführrohr 6a entlang eines Detektionsabschnitts 12, der der Länge der Elektroden 11 entspricht.

Hier sind also der Detektionsabschnitt 12 und der Interaktionsabschnitt 9 beide in einem gemeinsamen linearen Abschnitt (Rückführrohr 6a) vorgesehen, und zwar nebeneinander in einer Richtung parallel zur linearen Führungsrichtung A. Der Detektionsabschnitt 12 ist also gegenüber dem Interaktionsabschnitt 9 entlang der Rückführeinrichtung 6 versetzt.

Es ist zu beachten, dass die Energieerzeugungseinrichtung 7 mit der Sensoreinheit 10 über elektrische Leitungen verbunden sein kann.

Weiterhin ist hier das Rückführrohr 6a als von dem Grundkörper 31 getrenntes Element vorgesehen und wird aus dem Modul der Energieerzeugungseinrichtung 7 und einem weiteren Rohrabschnitt ausgebildet, wobei das Modul anbringbar und abnehmbar ist. An dem weiteren Rohrabschnitt ist das Modul der Sensoreinheit 10 anbringbar und abnehmbar.

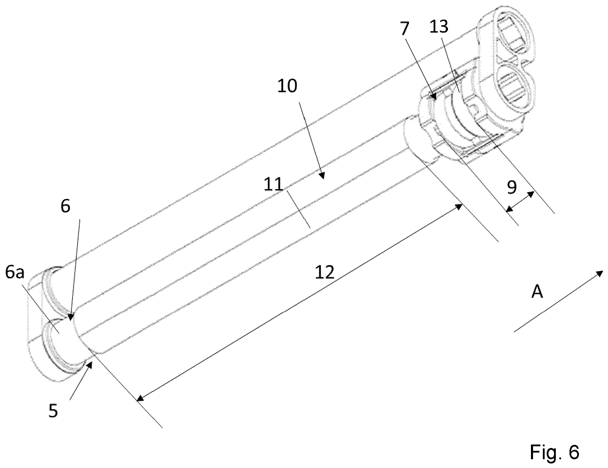

In Fig. 6 sind ebenfalls zwei Rückführrohre 6a wie in Fig. 4 dargestellt. Jedoch ist in Fig. 6 die Energieerzeugungseinrichtung 7 anders ausgebildet. Die Energieerzeugungseinrichtung 7 umfasst hier eine Induktionseinrichtung 13. Die Induktionseinrichtung 13 kann beispielsweise umfassen: einen Permanentmagneten zur Erzeugung eines statischen Magnetfeldes in dem Interaktionsabschnitt 9, den zumindest ein Wälzkörper 4 im Betrieb bei Zirkulation in der Umlaufeinrichtung nacheinander durchqueren muss, wobei die Wälzkörper 4 aus einem magnetisch permeablen Material bestehen, beispielsweise Stahl, sodass die Wälzkörper geeignet sind, das Magnetfeld abhängig von der Position der Wälzkörper 4 in dem Interaktionsabschnitt zu beeinflussen; und mindestens eine Induktionsspule mit mindestens einer Spulenwindung, wobei die mindestens eine Induktionsspule relativ zu der Einrichtung zur Erzeugung eines statischen Magnetfeldes derart stationär angeordnet ist, dass sie aufgrund einer Änderung der Position der Wälzkörper 4 bei einer Zirkulation der Wälzkörper 4 durch den Interaktionsabschnitt 9 eine Änderung eines magnetischen Flusses erfährt, die in der mindestens einen Spulenwindung eine elektrische Spannung induziert.

Die Energieerzeugungseinrichtung, insbesondere die Induktionseinrichtung 13 kann ebenfalls als Modul ausgestaltet sein und zusammen mit einem weiteren Rohrabschnitt des Rückführrohrs 6a das fluiddichte Rückführrohr 6a bilden.

Auch hier bildet die Induktionseinrichtung 13 einen Teil der Rückführeinrichtung 6 aus, wobei die Induktionseinrichtung 13 gleichzeitig die Führung der Wälzkörper übernimmt.

Zur Kenntnis zu nehmen ist, dass oben die Wälzkörper 4 Zylinderrollen sein können.

In Figuren 7A und 7B sind beispielhafte Anordnungen von Energieerzeugungseinrichtung 7/Interaktionsabschnitt 9 und Sensoreinheit 10/Detektionsabschnitt 12 gezeigt in einem Schnitt parallel zur Relativbewegungsebene gezeigt. Dabei sind die Wälzkörper jedoch als Kugeln gezeigt. Die Anordnungen sind jedoch auf die obigen Ausführungen übertragbar.

In Fig. 7A sind, wie oben für Figuren 4 und 6 ausgeführt, der Detektionsabschnitt 12 und der Interaktionsabschnitt 9 beide vollständig versetzt zueinander in einem linearen Abschnitt vorgesehen. Die Energieerzeugungseinrichtung 7 umgibt die Wälzkörper 4 und erstreckt sich parallel zur Rückführeinrichtung 6. Es ist zur Kenntnis zu nehmen, dass die Energieerzeugungseinrichtung wie oben direkt die Rückführeinrichtung 6 ausbilden kann oder aber auch an einer Außenperipherie der Rückführeinrichtung 6 vorgesehen sein kann. Auch die Sensoreinheit 10 umgibt die Wälzkörper 4 und erstreckt sich parallel zur Rückführeinrichtung 6. Es ist zur Kenntnis zu nehmen, dass die Sensoreinheit 10 wie oben an einer Außenperipherie der Rückführeinrichtung 6 vorgesehen sein oder direkt die Rückführeinrichtung 6 ausbilden kann.

Dabei umgibt die Energieerzeugungseinrichtung 7 den Interaktionsabschnitt 9 in einem Schnitt quer zu einer Erstreckungsrichtung (hier lineare Führungsrichtung A) des Interaktionsabschnitts 9 zumindest teilweise, insbesondere vollständig. Auch umgibt die Sensoreinheit 10 den Detektionsabschnitt 12 in einem Schnitt quer zu einer Erstreckungsrichtung (hier lineare Führungsrichtung A) des Detektionsabschnitts 12 zumindest teilweise, insbesondere vollständig.

Sensoreinheit 10 und Energieerzeugungseinrichtung 7 sind jeweils teilweise auf einer der Führungseinrichtung 2 zugewandten Seite bezüglich des Rückführrohrs 6a.

Entlang der linearen Führungsrichtung A können sich Energieerzeugungseinrichtung 7 und Sensoreinheit 10 zumindest teilweise überlappen.

In Fig. 7B sind der Interaktionsabschnitt 9 und der Detektionsabschnitt 12 in einem gekrümmten Abschnitt 6b vorgesehen. Es ist zur Kenntnis zu nehmen, dass die Energieerzeugungseinrichtung direkt die Rückführeinrichtung 6 ausbilden kann oder aber auch an einer Außenperipherie der Rückführeinrichtung 6 vorgesehen sein kann. Auch die Sensoreinheit 10 kann an einer Außenperipherie der Rückführeinrichtung 6 vorgesehen sein oder direkt die Rückführeinrichtung 6 ausbilden kann.

Dabei umgibt die Energieerzeugungseinrichtung 7 den Interaktionsabschnitt 9 in einem Schnitt quer zu einer Erstreckungsrichtung des Interaktionsabschnitts 9 zumindest teilweise, insbesondere vollständig. Auch umgibt die Sensoreinheit 10 den Detektionsabschnitt 12 in einem Schnitt quer zu einer Erstreckungsrichtung (hier lineare Führungsrichtung A) des Detektionsabschnitts 12 zumindest teilweise, insbesondere vollständig.

In Fig. 7B ist die Sensoreinheit 10 zumindest teilweise radial innerhalb des gekrümmten Abschnitts 6b vorgesehen ist. Allerdings können in Figuren 7A und 7B der Interaktionsabschnitt 9/die Energieerzeugungseinrichtung 7 und der Detektionsabschnitt 12/die Sensoreinheit 10 auch die Positionen tauschen.

Wenn die Energieerzeugungseinrichtung 7 die piezoelektrische Einrichtung umfasst und der Interaktionsabschnitt 9 im gekrümmten Abschnitt 9 vorliegt, ist es vorteilhaft, wenn die piezoelektrische Einrichtung auf der radial äußeren Seite liegt, um eine Zentrifugalkraft zu empfangen. Die piezoelektrische Einrichtung kann auch eine elastische Kraft empfangen, wenn der Wälzkörper beispielsweise eingeklemmt wird.

In Figuren 7A und 7B ist weiterhin eine drahtlose Kommunikationseinheit 14 gezeigt. Die drahtlose Kommunikationseinheit 14 liegt jeweils weiter außen als die Energieerzeugungseinrichtung 7 und/oder die Sensoreinheit 10 in der Führungsrichtung A. Hier liegt die drahtlose Kommunikationseinheit 14 nach außen frei. Die drahtlose Kommunikationseinheit kann über Leitungen mit der Energieerzeugungseinrichtung 7 und/oder Sensoreinheit 10 verbunden sein. Beispielsweise kann die drahtlose Kommunikationseinheit 14 von der Sensoreinheit 10 detektierte Informationen senden.

Wie in Fig. 7B können die Sensoreinheit 10 und/oder die Energieerzeugungseinrichtung 7 in einem Endabschnitt, hier der Endkappe 32 vorgesehen sein. Es ist vorteilhaft, wenn sich die drahtlose Kommunikationseinheit im anderen Endabschnitt befindet.

Gemäß den obigen Ausführungen kann die elektrische Energie durch Interaktion mit zumindest einem Wälzkörper 4 gewonnen werden, insbesondere durch Umwandlung der kinetischen Energie und/oder potentiellen Energie des zumindest einen Wälzkörpers 4. Somit kann die Gewinnung der elektrischen Energie auf einfache Weise mittels bereits bei einer Linearführung 1 vorhandener Komponenten, insbesondere mittels der Wälzkörper 4, erfolgen. Weiterhin ist der Interaktionsabschnitt 9 in der Rückführeinrichtung 6, also mit anderen Worten nicht im Laufabschnitt 3a, vorgesehen. Somit kann die Energieerzeugungseinrichtung 7 an der Rückführeinrichtung 6 vorgesehen werden oder diese zum Teil bilden, ohne andere Elemente in der Umgebung, wie die Führungseinrichtung, zu stören. Die Energieerzeugungseinrichtung 7 kann dadurch einfach vorgesehen werden, und der Linearführungsschlitten 3 kann kompakt gehalten werden. Darüber hinaus kann der Laufabschnitt 3a weitgehend unbeeinflusst von der elektrischen Energiegewinnung bleiben, insbesondere die Wälzkörper 4 im Laufabschnitt 3a. Die Kraftübertragung sowie die Relativbewegung zwischen Führungseinrichtung 2 und Linearführungsschlitten 3 können demnach zuverlässig erfolgen.

Auch die Anordnung des Detektionsabschnitts 12 und der Sensoreinheit 10 erlaubt ebenso eine kompakte Ausführung des Linearführungsschlittens 3.

Unabhängig davon ob die Energieerzeugungseinrichtung 7 und/oder die Sensoreinheit 10 die Rückführeinrichtung 6 bildet oder an ihr angebracht ist, kann zumindest jeweils ein Teil davon auf einer bezüglich eines am weitesten von dem Laufabschnitt 3a in der Breitenrichtung entfernten Abschnitt der Rückführeinrichtung der Führungseinrichtung 2 zugewandten Seite vorgesehen. Dies fördert die Kompaktheit weiterhin.

Die folgenden weiteren Merkmale sind mit den obigen Ausführungen einzeln oder in Kombination kombinierbar, wenn die entsprechende unten angegebene Modifikation berücksichtigt wird.

Auch wenn nicht dargestellt, kann der Linearführungsschlitten 3 eine elektronische Steuereinrichtung umfassen, die mit der Energieerzeugungseinrichtung energetisch, beispielsweise über Leitungen gekoppelt ist. Die elektronische Steuereinrichtung einen Prozessor enthalten und eine Steuerung entsprechend einer Software durchführen. Zur Steuerung kann sie mit der Energieerzeugungseinrichtung 7, der Sensoreinheit 10 und/oder der drahtlosen Kommunikationseinheit 14 gekoppelt sein. Die elektronische Steuereinrichtung kann Prozesse in dem Linearführungsschlitten 3 steuern, wie eine Steuerung der Energieerzeugungseinrichtung 7, der Sensoreinheit 10 und/oder der drahtlosen Kommunikationseinheit 14, einzeln oder untereinander. Diese Steuerung kann autark am Linearführungsschlitten 3 erfolgen, da die elektrische Energie von der Energieerzeugungseinrichtung 7 bereitgestellt werden kann.

Eine energetische/elektrische Kopplung zwischen der Energieerzeugungseinrichtung und der Sensoreinheit und/oder der drahtlosen Kommunikationseinheit und/oder der elektronischen Steuereinrichtung ist nicht nur über Leitungen möglich, sondern auch induktiv. Weiterhin kann der Linearführungsschlitten ein Speicherelement zur Speicherung elektrischer Energie, wie einen Akkumulator und/oder Kondensator umfassen, in den die Energieerzeugungseinrichtung einspeichern kann. Dann kann die energetische Kopplung nicht direkt mit der Energieerzeugungseinrichtung, sondern indirekt über das Speicherelement erfolgen.

Die Energieerzeugungseinrichtung kann verschiedene Schaltungselemente, wie Gleichrichter umfassen.

Die Sensoreinheit 10 umfasst oben einen Schmiermittelsensor. Jedoch kann die Sensoreinheit alternativ oder zusätzlich einen Temperatursensor und/oder einen Inertialsensor umfassen. Es können auch mehrere Sensoreinheiten mit jeweils unterschiedlichen Sensoren und jeweils Als Modul vorgesehen werden.

Es können auch mehrere Interaktionsabschnitte entsprechend mehreren Energieerzeugungseinrichtungen und mehrere Detektionsabschnitte entsprechend mehreren Sensoreinheiten in einer Umlaufeinrichtung, insbesondere einer Rückführeinrichtung vorgesehen sein.

Oben ist zumindest eine Energieerzeugungseinrichtung nur für eine Rückführeinrichtung vorgesehen. Sie kann aber auch für mehrere Rückführeinrichtungen vorgesehen sein. Gleiches gilt für die zumindest eine Sensoreinheit.

Einer von dem Detektionsabschnitt 12 und dem Interaktionsabschnitt 9 kann in dem linearen Abschnitt vorliegen, während der andere im gekrümmten Abschnitt vorliegen kann.

Der Laufabschnitt 3a ist als eine planare Fläche gezeigt. Jedoch kann der Laufabschnitt auch eine Nut beispielsweise für Kugeln als Wälzlager darstellen.

Die Energieerzeugungseinrichtung kann auch so angeordnet sein, dass sie die Rückführeinrichtung nicht bildet. Beispielsweise kann sie auch so vorgesehen sein, dass sie direkt an einer Außenperipherie der Rückführeinrichtung vorgesehen ist. Sie kann jedoch auch mit einem Abstand zur Rückführeinrichtung vorgesehen sein, beispielsweise wenn sie eine Induktionseinrichtung umfasst.

Die Sensoreinheit kann die Rückführeinrichtung ebenfalls bilden, und muss nicht an der Außenperipherie vorgesehen sein. Sie kann aber auch in einem Abstand zur Außenperipherie vorgesehen sein.

## Patentansprüche

1. Linearführungsschlitten (3) zur linearen Führung entlang einer Führungseinrichtung (2), umfassend:
- einen Laufabschnitt (3a), zwischen dem und der Führungseinrichtung (2) eine Vielzahl von Wälzkörpern (4) beweglich sind, um den Linearführungsschlitten (3) relativ zur Führungseinrichtung (2) bewegen zu lassen;
- eine Rückführeinrichtung (6), die ausgestaltet ist, die Vielzahl von Wälzkörpern (4) von einem Ende des Laufabschnitts (3a) zum anderen Ende des Laufabschnitts (3a) zurückzuführen; und
- eine Energieerzeugungseinrichtung (7), die ausgestaltet ist, durch Interaktion mit zumindest einem Wälzkörper (4) in einem Interaktionsabschnitt (9) der Rückführeinrichtung (6) elektrische Energie bereitzustellen.

2. Der Linearführungsschlitten (3) nach Anspruch 1, wobei
der Interaktionsabschnitt (9) in einem linearen Abschnitt (6a) der Rückführeinrichtung (6) vorliegt, insbesondere in einem linearen Abschnitt (6a) parallel zu einer linearen Führungsrichtung (A).

3. Der Linearführungsschlitten (3) nach Anspruch 1, wobei
der Interaktionsabschnitt (9) in einem gekrümmten Abschnitt (6b) der Rückführeinrichtung (6) vorliegt.

4. Der Linearführungsschlitten (3) nach zumindest einem der vorangehenden Ansprüche, wobei
die Energieerzeugungseinrichtung (7) eine Induktionseinrichtung (13) umfasst.

5. Der Linearführungsschlitten (3) nach zumindest einem der vorangehenden Ansprüche, wobei
die Energieerzeugungseinrichtung (7) eine piezoelektrische Einrichtung (8) umfasst.

6. Der Linearführungsschlitten (3) nach zumindest einem der vorangehenden Ansprüche, weiterhin umfassend eine Sensoreinheit (10), die energetisch mit der Energieerzeugungseinrichtung (7) gekoppelt ist.

7. Der Linearführungsschlitten (3) nach Anspruch 6, wobei
die Sensoreinheit (10) ausgestaltet ist, eine Eigenschaft in der Rückführeinrichtung (6) in einem Detektionsabschnitt (12) der Rückführeinrichtung (6) zu detektieren.

8. Der Linearführungsschlitten (3) nach Anspruch 7, wobei
der Detektionsabschnitt (12) in einem linearen Abschnitt (6a) der Rückführeinrichtung (6) vorliegt.

9. Der Linearführungsschlitten (3) nach Anspruch 7 oder 8, wobei der Detektionsabschnitt (12) an einer Position, die von dem Interaktionsabschnitt (9) versetzt ist, vorliegt.

10. Der Linearführungsschlitten (3) nach zumindest einem der vorangehenden Ansprüche, wobei
der Linearführungsschlitten (3) einen Grundkörper (31) aufweist, und
die Rückführeinrichtung (6) zumindest im Interaktionsabschnitt (9) und/oder im Detektionsabschnitt (12) vom Grundkörper (31) getrennt ausgebildet ist.

11. Der Linearführungsschlitten (3) nach zumindest einem der vorangehenden Ansprüche, weiterhin umfassend eine drahtlose Kommunikationseinheit (14), die mit der Energieerzeugungseinrichtung (7) energetisch gekoppelt ist.

12. Der Linearführungsschlitten (3) nach Anspruch 11, wobei
die drahtlose Kommunikationseinheit (14) entlang einer linearen Führungsrichtung (A) weiter außen liegt als die Energieerzeugungseinrichtung (7) und/oder die Sensoreinheit (10).

13. Der Linearführungsschlitten (3) nach zumindest einem der vorangehenden Ansprüche, weiterhin umfassend eine elektronische Steuereinrichtung, die energetisch mit der Energieerzeugungseinrichtung (7) gekoppelt ist.

14. Der Linearführungsschlitten (3) nach zumindest einem der vorangehenden Ansprüche, wobei
die Energieerzeugungseinrichtung (7) und/oder die Sensoreinheit (10) und/oder die drahtlose Kommunikationseinheit (14) und/oder die elektronische Steuereinrichtung als Module ausgestaltet sind.

15. Linearführung (1), umfassend:
eine Führungseinrichtung (2); und
den Linearführungsschlitten (3) nach zumindest einem der vorangehenden Ansprüche, der relativ zur Führungseinrichtung (2) beweglich ist.
